# EUROPÄISCHE PATENTANMELDUNG

(11) **EP 4 393 734 A1**
(43) Veröffentlichungstag der Anmeldung: **03.07.2024**
(21) Anmeldenummer: 23220411.5
(22) Anmeldetag: 27.12.2023
(51) Int. Cl.: B60J 1/00, B60J 1/18

(54) **FREIZEITFAHRZEUG SCHEIBENTRÄGER SOWIE ANORDNUNQ MIT EINEM SCHEIBENTRÄGER**

(30) Priorität: 31.12.2022 DE 102022135083
(71) Anmelder: Bürstner GmbH & CO. KG, 77694 Kehl (DE)
(72) Erfinder: Almeida, Gilberto, 76437 Rastatt (DE); Niedick, Tim, 77652 Offenburg (DE)
(74) Vertreter: Müller Schupfner & Partner Patent- und Rechtsanwaltspartnerschaft mbB (Muc)

(57) **Zusammenfassung**

Scheibenträger (6) für ein auf einem Basisfahrzeug (1'), insbesondere auf einem Kleintransporter als Basisfahrzeug (1'), basierendes Freizeitfahrzeug (1), insbesondere einen Campervan, wobei das Basisfahrzeug (1') so ausgestaltet ist, dass an einer Karosserieöffnung (8) eine nicht öffenbare Fensterscheibe montiert oder montierbar ist. Vorgeschlagen wird, dass ein Halterahmen (12) vorgesehen ist, der zum Halten einer Scheibe (10) dient, dass ein Befestigungsrahmen (14) vorgesehen ist, der an der Karosserieöffnung (8) befestigbar ist, dass der Halterahmen (12) relativ zu dem Befestigungsrahmen (14) verstellbar ist und dass der Halterahmen (12) im geschlossenen Zustand den Befestigungsrahmen (14) von außen betrachtete umfänglich zumindest im Wesentlichen überdeckt. Ferner sind ein Freizeitfahrzeug (1) und eine Anordnung (5) angegeben.

## Beschreibung

Die Erfindung betrifft ein Freizeitfahrzeug, einen Scheibenträger und eine Anordnung mit einem Scheibenträger. Hierbei basiert das Freizeitfahrzeug auf einem Basisfahrzeug, insbesondere einem Kleintransporter.

Bei der Herstellung eines Freizeitfahrzeugs kann ein Basisfahrzeug genutzt werden, an dem Modifikationen vorgenommen werden können und in das unter anderem Einrichtungen, wie ein Bett, eine Koch- beziehungsweise Kücheneinrichtung, eine Toilette, Einbauschränke und dergleichen, eingebaut werden können. Das Basisfahrzeug kann hierbei entsprechend einem Serienfahrzeug, wie einem Kastenwagen, der beispielsweise auch von Handwerkern und Transportunternehmen genutzt wird, hergestellt werden. Dies ermöglicht die Nutzung eines vergleichsweise kostengünstigen Basisfahrzeugs als Vorprodukt zur Herstellung des Freizeitfahrzeugs. Allerdings können bestimmte Vorgaben an das Serienfahrzeug, die durch die anderen Nutzungen bedingt sind, dann Kompromisse bei der Nutzung des Basisfahrzeugs für die Herstellung des Freizeitfahrzeugs bedingen. Dies betrifft insbesondere die Hecktüre. So kann die Ausgestaltung der Hecktüre eines bestimmten Basisfahrzeugs nicht mit einer gewünschten Heckscheibe kompatibel sein. Der Einbau eines Scheibenträgers, der ein Öffnen einer von dem Scheibenträger gehaltenen Scheibe ermöglicht, kann eine kleine Öffnung bedingen. Der Austausch der Hecktüre eines Basisfahrzeugs oder die Nutzung eines Basisfahrzeugs ohne Hecktüre würde andererseits aber unter anderem die individuelle Entwicklung, Zulassung und Herstellung einer Hecktüre für eine vergleichsweise kleine Stückzahl erfordern, was mit hohen Stückkosten verbunden ist.

Aufgabe der Erfindung ist es, einen Scheibenträger für ein Freizeitfahrzeug, insbesondere für einen Campervan, eine Anordnung mit einem Scheibenträger und ein Freizeitfahrzeug so auszubilden, dass mit nur niedrigen Zusatzkosten eine verbesserte Funktionalität und Ausgestaltung ermöglicht sind.

Die Aufgabe wird durch eine Scheibenträger mit den Merkmalen des unabhängigen Patentanspruchs 1, durch eine Anordnung mit den Merkmalen des Patentanspruchs 6 und durch ein Freizeitfahrzeug mit den Merkmalen des Patentanspruchs 9 gelöst. Vorteilhafte Weiterbildung der Erfindung sind in den Unteransprüchen angegeben.

Die Aufgabe wird durch einen Scheibenträger für ein auf einem Basisfahrzeug, insbesondere auf einem Kleintransporter als Basisfahrzeug, basierendes Freizeitfahrzeug, insbesondere einen Campervan, gelöst, wobei das Basisfahrzeug so ausgestaltet ist, dass an einer Karosserieöffnung eine nicht öffenbare Scheibe montiert oder montierbar ist, wobei ein Halterahmen vorgesehen ist, der zum Halten einer Scheibe dient, wobei ein Befestigungsrahmen vorgesehen ist, der an der Karosserieöffnung befestigbar ist, wobei der Halterahmen relativ zu dem Befestigungsrahmen verstellbar ist und wobei der Halterahmen im geschlossenen Zustand den Befestigungsrahmen von außen betrachtete umfänglich zumindest im Wesentlichen überdeckt.

Ferner wird die Aufgabe durch eine Anordnung mit einem solchen Scheibenträger gelöst, wobei eine Scheibe vorgesehen ist, die mit dem Scheibenträger verbunden ist.

Außerdem wird die Aufgabe durch ein Freizeitfahrzeug, insbesondere einen Campervan, das auf einem Basisfahrzeug, insbesondere auf einem Kleintransporter als Basisfahrzeug, basiert, gelöst, wobei zumindest eine solche Anordnung vorgesehen ist.

Das Basisfahrzeug ist bei einer besonders bevorzugten Ausgestaltung ein Kleintransporter. Der Begriff des Kleintransporters ist hierbei allgemein zu verstehen und umfasst insbesondere Kastenwagen und Kleinlaster. Der Kleintransporter kann hierbei auch als großer Kleintransporter, der auch als großer Transporter bezeichnet wird, ausgebildet sein. Weiter bevorzugt ist das Basisfahrzeug als Kleintransporter mit einem zulässigen Gesamtgewicht bis 3,5 Tonnen ausgebildet. Das Basisfahrzeug kann aber im jeweiligen Anwendungsfall auch mit einem zulässigen Gesamtgewicht von mehr als 3,5 Tonnen bis 7,5 Tonnen ausgebildet sein.

Vorteilhaft ist es, dass der Befestigungsrahmen umfänglich geschlossen ausgestaltet ist. Hierdurch wird eine zuverlässige Befestigung ermöglicht. Es kann dadurch eine einfache Montage ermöglicht werden.

Vorteilhaft ist es, dass zumindest ein Parallelogrammscharnier vorgesehen ist, das einerseits mit dem Befestigungsrahmen und andererseits mit dem Halterahmen verbunden ist, und dass der Halterahmen bei einer Verstellung relativ zu dem Befestigungsrahmen durch das zumindest eine Parallelogrammscharnier geführt ist. Dadurch wird ein Öffnen ermöglicht, bei dem die Scheibe umfänglich von der Karosserie beabstandet ist, so dass eine vorteilhafte Belüftung ermöglicht wird.

Vorteilhaft ist es, dass zumindest eine Gasdruckfeder vorgesehen ist, die einerseits mit dem Befestigungsrahmen und andererseits mit dem Halterahmen verbunden ist, und dass die zumindest eine Gasdruckfeder den Halterahmen im geöffneten Zustand geöffnet hält. Die Gasdruckfeder kann auch ein Öffnen des Halterahmens zumindest unterstützen. Bei einer möglichen Ausgestaltung kann die Gasdruckfeder den Halterahmen in der Öffnungsrichtung beaufschlagen, so dass nach einem Entriegeln des Halterahmens ein automatischen Öffnen des Fensters erfolgen kann.

Vorteilhaft ist es, dass zumindest ein Sperrhebel vorgesehen ist, der an dem Halterahmen angeordnet ist, und dass der Sperrhebel so ausgebildet und an dem Halterahmen angeordnet ist, dass im geschlossenen Zustand des Halterahmens ein Verriegelungsbereich des Sperrhebels durch ein Drehen des Sperrhebels durch einen Benutzer den Befestigungsrahmen hintergreift. Hierdurch ist eine vorteilhafte Verriegelung möglich. Ferner ist auch eine vorteilhafte Entriegelung möglich. Bei einer bevorzugten Ausgestaltung sind zwei Sperrhebel vorgesehen, die vorzugsweise an einer oberen Innenseite und einer unteren Innenseite an dem Halterahmen angeordnet sind.

Vorteilhaft ist es, dass die Scheibe zumindest durch einen Klebstoff mit dem Halterahmen verbunden ist. Dadurch sind eine einfache Herstellung und Montage möglich.

Vorteilhaft ist es, dass der Halterahmen so ausgestaltet ist, dass im geschlossen Zustand der Halterahmen und die mit dem Halterahmen verbundene Scheibe zumindest von außen betrachtet zumindest im Wesentlichen so ausgestaltet sind, wie das Basisfahrzeug mit einer an der Karosserieöffnung montierten, nicht öffenbaren Fensterscheibe. Speziell kann von außen betrachtet die Scheibe sowohl den Halterahmen als auch den Befestigungsrahmen überdecken. Die vorzugsweise auf den Halterahmen geklebte Scheibe kann sich dann von außen vorteilhaft in die Karosserie einfügen.

Vorteilhaft ist es, dass die Karosserieöffnung an einer Hecktüre vorgesehen ist. Hierbei kann eine an dem Basisfahrzeug an der Hecktüre vorgesehene Karosserieöffnung genutzt werden. Die Karosserieöffnung des Basisfahrzeugs kann hierbei zumindest im Wesentlichen unverändert bleiben, so dass diesbezüglich insbesondere keine erneute Zulassung erforderlich ist. Wenn das Basisfahrzeug eine zweiteilige Hecktüre aufweist, dann ist vorzugsweise an jedem Flügel der Hecktüre eine Anordnung mit einem Scheibenträger an der Karosserieöffnung des jeweiligen Flügels der Hecktüre vorgesehen.

Weitere Vorteile und Einzelheiten der Erfindung werden anhand des in den schematischen Figuren dargestellten Ausführungsbeispiels näher erläutert. Hierbei zeigen:
- Fig. 1A: eine Hecktüre eines Freizeitfahrzeugs mit einer Anordnung, die einen Scheibenträger und eine Scheibe umfasst, entsprechend einem Ausführungsbeispiel in einer auszugsweisen, schematischen, räumlichen Darstellung, wobei eine Ansicht von außen dargestellt ist, bei der der Scheibenträger geöffnet ist;
- Fig. 1B: die in Fig. 1A dargestellte Hecktüre in einer auszugsweisen, schematischen, räumlichen Darstellung, wobei eine Ansicht von innen dargestellt ist, bei der der Scheibenträger geöffnet ist;
- Fig. 2A: die in Fig. 1A dargestellte Hecktüre, wobei der Scheibenträger geschlossen ist;
- Fig. 2B: die in Fig. 1B dargestellte Hecktüre, wobei der Scheibenträger geschlossen ist;
- Fig. 3: der Scheibenträger entsprechend dem Ausführungsbeispiel in einer schematischen, räumlichen Darstellung im geöffneten Zustand;
- Fig. 4: ein Parallelogrammscharnier des in Fig. 3 dargestellten Scheibenträgers in einer schematischen, räumlichen Darstellung;
- Fig. 5: eine Hecktüre entsprechend dem Ausführungsbeispiel in einer Ansicht von außen, wobei ein Scheibenträger an einem Flügel geöffnet und ein weiterer Scheibenträger an dem anderen Flügel geschlossen ist; und
- Fig. 6: die in Fig. 5 dargestellte Hecktüre in einer auszugsweisen Ansicht von innen, wobei ein Scheibenträger an einem Flügel im geschlossenen Zustand dargestellt ist.

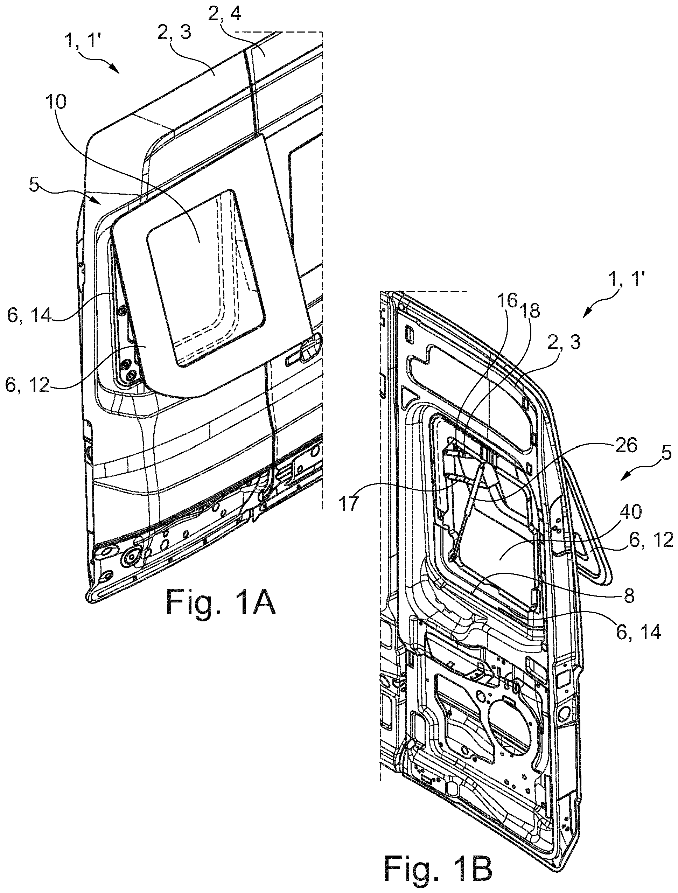

Fig. 1A zeigt ein Teil eines Freizeitfahrzeug 1, nämlich eine Hecktüre 2, die auf einer Hecktüre eines Basisfahrzeugs 1' basiert, in einer auszugsweisen, schematischen, räumlichen Darstellung entsprechend einem Ausführungsbeispiel, wobei eine Ansicht von außen dargestellt ist. Ferner zeigt Fig. 1B die in Fig. 1A dargestellte Hecktüre 2 in einer auszugsweisen, schematischen, räumlichen Darstellung, wobei eine Ansicht von innen dargestellt ist. Die Hecktüre 2 weist in diesem Ausführungsbeispiel Flügel (Türflügel) 3, 4 auf. Ausgehend von dem Basisfahrzeug 1' erfolgt eine Modifikation durch eine Anordnung 5 mit einem Scheibenträger 6. In Fig. 1A und 1B ist der Scheibenträger 6 jeweils geöffnet dargestellt. Zur Vereinfachung der Darstellung und Erläuterung sind sich entsprechende Elemente an dem Türflügel 3 und dem Türflügel 4 mit dem gleichen Bezugszeichen versehen.

Das Freizeitfahrzeug 1 ist bei diesem bevorzugten Ausführungsbeispiel als Campervan ausgebildet. Das Freizeitfahrzeug 1 kann als Wohnmobil ausgestaltet sein. Der Scheibenträger 6 eignet sich insbesondere für solche Freizeitfahrzeuge 1 beziehungsweise für Hecktüren 2 solcher Freizeitfahrzeuge 1. Das Freizeitfahrzeug 1 basiert auf einem Basisfahrzeug 1', das insbesondere ein Kleintransporter sein kann. Hierbei kommt ein Basisfahrzeug 1' zum Einsatz, bei dem eine Karosserieöffnung 8 vorgesehen ist, an der bei dem Basisfahrzeug 1' eine nicht öffenbare Fensterscheibe montiert oder montierbar ist, um im Rahmen der Serienfertigung des betreffenden Kleintransporters eine Durchsicht, insbesondere nach hinten, zu ermöglichen. Bei einer möglichen Ausgestaltung des Basisfahrzeugs 1' kann die Karosserie auch so ausgestaltet sein, dass wahlweise die Karosserieöffnung oder dort das Karosserieblech der Hecktür vorgesehen sein kann.

Der Scheibenträger 6 weist einen Halterahmen 12 auf, der zum Halten einer Scheibe 10 dient. Bei der Scheibe 10 handelt es sich vorzugsweise um eine Fensterscheibe, wobei beispielsweise Glas und Kunststoffe zum Einsatz kommen können. Der Scheibenträger 6 umfasst auch einen Befestigungsrahmen 14, der an der Karosserieöffnung 8 befestigbar ist. Der Halterahmen 12 ist relativ zu dem Befestigungsrahmen 14 verstellbar. Der Halterahmen 12 überdeckt den Befestigungsrahmen 14 von außen betrachtete umfänglich, wenn der Scheibenträger 6 geschlossen ist.

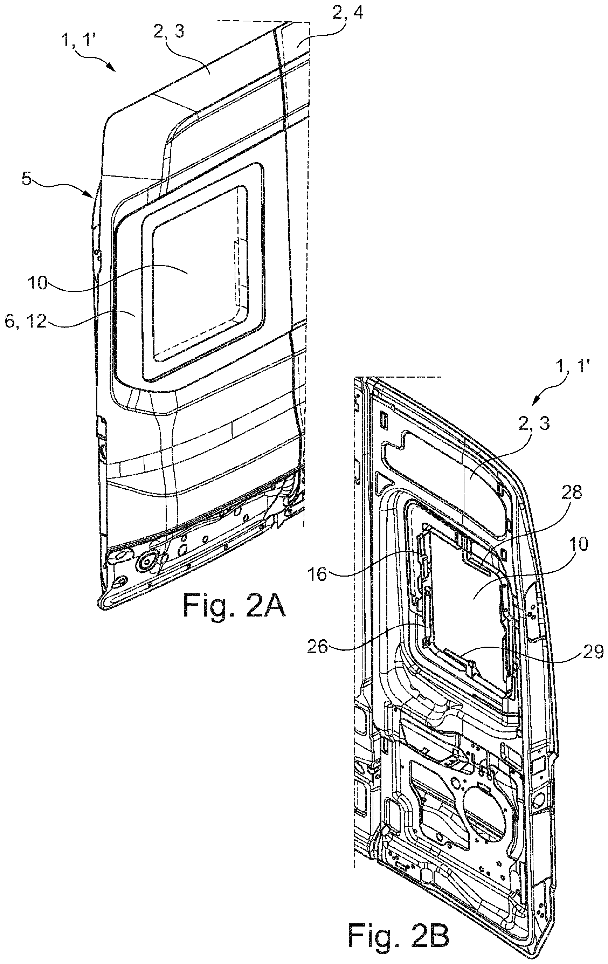

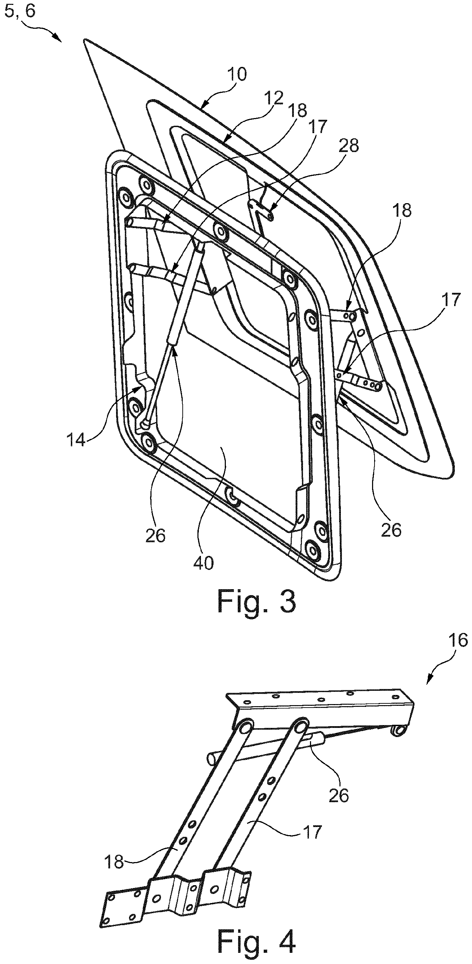

Fig. 2A zeigt die in Fig. 1A dargestellte Hecktüre 2, also eine Ansicht von außen, und Fig. 2B zeigt die in Fig. 1B dargestellte Hecktüre 2, also eine Ansicht von innen, wobei der Scheibenträger 6 jeweils geschlossen ist. Ferner zeigt Fig. 3 den Scheibenträger 6 entsprechend dem Ausführungsbeispiel in einer schematischen, räumlichen Darstellung im geöffneten Zustand, wobei zusätzliche Details veranschaulicht sind. Fig. 4 zeigt ein Parallelogrammscharnier 16 des in Fig. 3 dargestellten Scheibenträgers 6 in einer schematischen, räumlichen Darstellung, wobei in diesem Ausführungsbeispiel zwei solche Parallelogrammscharniere 16 an einem Scheibenträger 6 vorgesehen sind.

In diesem Ausführungsbeispiel ist der Befestigungsrahmen 14 umfänglich geschlossen ausgestaltet. Ferner sind Parallelogrammscharniere 16 vorgesehen, die einerseits mit dem Befestigungsrahmen 14 und andererseits mit dem Halterahmen 12 verbunden sind. Der Halterahmen 12 wird bei einer Verstellung relativ zu dem Befestigungsrahmen 14, also beim Öffnen und Schließen, durch die Parallelogrammscharniere 16 geführt. Die Parallelogrammscharniere 16 weisen in diesem Ausführungsbeispiel lange Beine 17 und kurze Beine 18 auf. Dadurch ergibt sich eine vorteilhafte Öffnungsbewegung, insbesondere eine Neigung, bei der der Halterahmen 12 unten weiter von Freizeitfahrzeug 1 absteht als oben, so dass beispielsweise Regenwasser von der Karosserie weggeführt wird.

Außerdem sind Gasdruckfedern 26 vorgesehen, die einerseits mit dem Befestigungsrahmen 14 und andererseits mit dem Halterahmen 12 verbunden sind. Die Gasdruckfedern 26 haltenden Halterahmen 12 im geöffneten Zustand. Ferner können die Gasdruckfedern 26 den Halterahmen beispielsweise nach einem gewissen Öffnungshub auch in eine vollständig geöffnete Stellung verstellen.

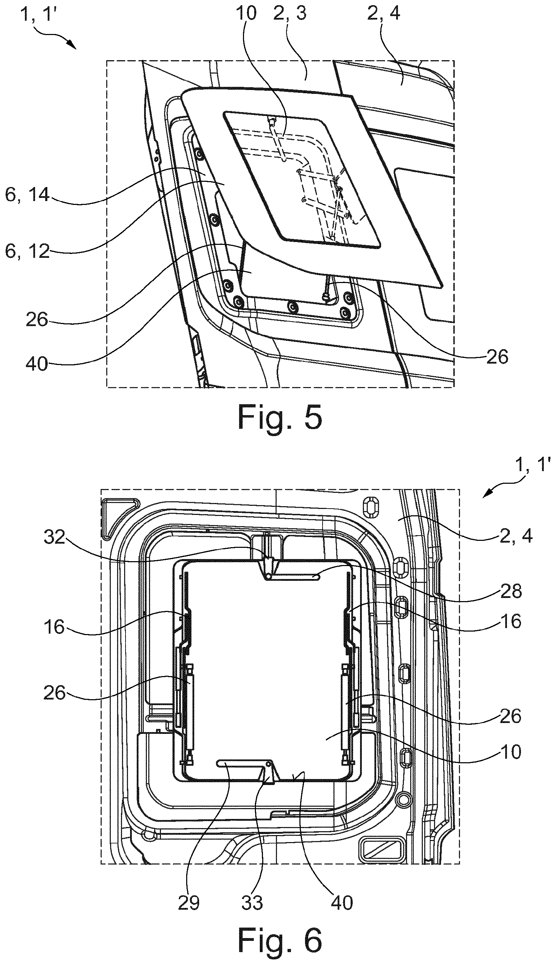

Fig. 5 zeigt die Hecktüre 2 entsprechend dem Ausführungsbeispiel in einer Ansicht von außen, wobei ein Scheibenträger 6 an einem Flügel 3 geöffnet und ein weiterer Scheibenträger 6 an dem anderen Flügel 4 geschlossen ist. Außerdem zeigt Fig. 6 die in Fig. 5 dargestellte Hecktüre 2 in einer auszugsweisen Ansicht von innen, wobei ein Scheibenträger 6 an einem Flügel 4 im geschlossenen Zustand dargestellt ist.

Der Scheibenträger kann in vorteilhafter Weise verriegelt werden. Hierfür sind Sperrhebel 28, 29 vorgesehen, die an dem Halterahmen 12 angeordnet sind. Bei geschlossenem Scheibenträger 6 können Verriegelungsbereiche 32, 33 der Sperrhebel 28, 29 den Befestigungsrahmen 14 hintergreifen, nachdem ein Benutzer die Sperrhebels 28, 29 entsprechend gedreht hat. Zum Öffnen Dreht der Benutzer die Sperrhebel 28, 29 in umgekehrter Richtung.

Die Scheibe 10 ist mit dem Scheibenträger 6 verbunden. Vorzugsweise kommt eine stoffschlüssige Verbindung mittels eine Klebstoffs zum Einsatz. Hierbei wird die Scheibe 10 durch den Klebstoff mit dem Halterahmen 12 verbunden. Der Halterahmen 12 ist so ausgestaltet, dass bei geschlossenem Scheibenträger 6 Halterahmen 12 und die mit dem Halterahmen 12 verbundene Scheibe 10 von außen betrachtet ein Design realisieren, dass an das Design des Basisfahrzeugs 1' im Rahmen der Serienverwendung angepasst ist. Speziell kann eine Anpassung an ein Basisfahrzeug 1' mit einer an der Karosserieöffnung 8 montierten, nicht öffenbaren Fensterscheibe, die bei der Serienausführung vorgesehen ist, erfolgen.

Wie es insbesondere in Fig. 5 veranschaulicht ist, kann mit dem Scheibenträger 6 des Ausführungsbeispiels ein große Öffnung 40 erreicht werden, wobei das ursprüngliche Design des Basisfahrzeugs 1' zumindest weitgehend beibehalten werden kann. Hierbei kann eine Anpassung des Scheibenträgers 6 an unterschiedliche Basisfahrzeuge 1' erfolgen.

Die Erfindung ist nicht auf die beschriebenen Ausführungsformen beschränkt.

## Patentansprüche

1. Scheibenträger (6) für ein auf einem Basisfahrzeug (1'), insbesondere auf einem Kleintransporter als Basisfahrzeug (1'), basierendes Freizeitfahrzeug (1), insbesondere einen Campervan, wobei das Basisfahrzeug (1') so ausgestaltet ist, dass an einer Karosserieöffnung (8) eine nicht öffenbare Fensterscheibe montiert oder montierbar ist,
**dadurch gekennzeichnet,**
**dass** ein Halterahmen (12) vorgesehen ist, der zum Halten einer Scheibe (10) dient, dass ein Befestigungsrahmen (14) vorgesehen ist, der an der Karosserieöffnung (8) befestigbar ist, dass der Halterahmen (12) relativ zu dem Befestigungsrahmen (14) verstellbar ist und dass der Halterahmen (12) im geschlossenen Zustand den Befestigungsrahmen (14) von außen betrachtete umfänglich zumindest im Wesentlichen überdeckt.

2. Scheibenträger nach Anspruch 1,
**dadurch gekennzeichnet,**
**dass** der Befestigungsrahmen (14) umfänglich geschlossen ausgestaltet ist.

3. Scheibenträger nach Anspruch 1 oder 2,
**dadurch gekennzeichnet,**
**dass** zumindest ein Parallelogrammscharnier (16) vorgesehen ist, das einerseits mit dem Befestigungsrahmen (14) und andererseits mit dem Halterahmen (12) verbunden ist, und dass der Halterahmen (12) bei einer Verstellung relativ zu dem Befestigungsrahmen (14) durch das zumindest eine Parallelogrammscharnier (16) geführt ist.

4. Scheibenträger nach einem der Ansprüche 1 bis 3,
**dadurch gekennzeichnet,**
**dass** zumindest eine Gasdruckfeder (26) vorgesehen ist, die einerseits mit dem Befestigungsrahmen (14) und andererseits mit dem Halterahmen (12) verbunden ist, und dass die zumindest eine Gasdruckfeder (26) den Halterahmen (12) im geöffneten Zustand geöffnet hält.

5. Scheibenträger nach einem der Ansprüche 1 bis 4,
**dadurch gekennzeichnet,**
**dass** zumindest ein Sperrhebel (28, 29) vorgesehen ist, der an dem Halterahmen (12) angeordnet ist, und dass der Sperrhebel (28, 29) so ausgebildet und an dem Halterahmen (12) angeordnet ist, dass im geschlossenen Zustand des Halterahmens (12) ein Verriegelungsbereich (32, 33) des Sperrhebels (28, 29) durch ein Drehen des Sperrhebels (28, 29) durch einen Benutzer den Befestigungsrahmen (14) hintergreift.

6. Anordnung (5) mit einem Scheibenträger nach einem der Ansprüche 1 bis 5,
**dadurch gekennzeichnet,**
**dass** eine Scheibe (10) vorgesehen ist, die mit dem Scheibenträger (6) verbunden ist.

7. Anordnung nach Anspruch 6,
**dadurch gekennzeichnet,**
**dass** die Scheibe (10) zumindest durch einen Klebstoff mit dem Halterahmen (12) verbunden ist.

8. Anordnung nach Anspruch 6 oder 7 ,
**dadurch gekennzeichnet,**
**dass** der Halterahmen (12) so ausgestaltet ist, dass im geschlossen Zustand der Halterahmen (12) und die mit dem Halterahmen (12) verbundene Scheibe (10) zumindest von außen betrachtet zumindest im Wesentlichen so ausgestaltet sind, wie das Basisfahrzeug (1') mit einer an der Karosserieöffnung (8) montierten, nicht öffenbaren Fensterscheibe.

9. Freizeitfahrzeug (1), insbesondere Campervan, das auf einem Basisfahrzeug (1'), insbesondere auf einem Kleintransporter als Basisfahrzeug (1'), basiert, wobei zumindest eine Anordnung (5) nach einem der Ansprüche 1 bis 8 vorgesehen ist.

10. Freizeitfahrzeug nach Anspruch 9,
**dadurch gekennzeichnet,**
**dass** die Karosserieöffnung (8) an einer Hecktüre (2) vorgesehen ist.
